# EUROPEAN PATENT APPLICATION

(11) **EP 1 033 835 A2**
(43) Date of publication of application: **06.09.2000**
(21) Application number: 00102400.9
(22) Date of filing: 03.02.2000
(51) Int. Cl.: H04B 10/207

(54) **Optical central office**

(30) Priority: 03.03.1999 US 261412
(71) Applicant: Agilent Technologies Inc, Palo Alto, CA 94306-2024 (US)
(72) Inventor: Baney, Douglas M., Los Altos, CA 94024 (US); Sorin, Wayne V., Mountain View, CA 94040 (US)
(74) Representative: Liesegang, Eva

(57) **Abstract**

A method and a system for distributing optical carrier signals involve generating (130) multiple optical carrier signals at unique carrier wavelengths, splitting (132) the carrier signals a first time, amplifying (134) the split carrier signals, splitting (136) the carrier signals a second time, modulating (138) data onto the twice-split carrier signals, and then multiplexing (140) modulated carrier signals of different wavelengths together for transmission over common optical paths. In one embodiment, the multiple optical carrier signals are split and amplified separately by unique carrier wavelength before being multiplexed. In other embodiments, the multiple optical carrier signals are multiplexed together for the first signal splitting and for the carrier signal amplification. The multiplexed signals are then demultiplexed so that the optical carrier signals can be individually modulated. The modulated optical carrier signals are then multiplexed with carrier signals of different carrier wavelengths for transmission throughout a subscriber area. By amplifying optical carrier signals during signal distribution, a low number of optical sources are required to distributed multiple optical carrier signals over a wide subscriber area.

## Description

### TECHNICAL FIELD

The invention relates generally to an optical communications system, and more particularly to a distribution system for optical carriers.

### BACKGROUND ART

Many subscriber-based optical communications systems utilize an optical central office to distribute an optical carrier signal throughout a subscriber area. One such optical central office is disclosed in U.S. Patent No. 5,337,175, entitled "Optical Communications System for the Subscriber Area with Optical Amplifiers," issued to Ohnsorge et al. (hereinafter Ohnsorge). According to Ohnsorge, optical energy of a first wavelength (λ₁) is distributed to downstream subscribers through a series of splitters. Optical amplifiers are positioned between the splitters within the series to compensate for signal losses that occur as a result of the splitting process. Optical energy of a second wavelength (λ₂) is transmitted upstream from the subscribers to the central office via the same distribution network. The central office is referred to in Ohnsorge as the center (1) and Ohnsorge discloses only one optical source (3) at the center to generate the downstream optical carrier, because the optical communications system utilizes only one down-stream optical carrier. Although the optical communications system of Ohnsorge works well for its intended purpose, because the system utilizes only one optical carrier it is limited as to the number of channels and consequently the total bandwidth that can be distributed throughout the subscriber area.

In order to increase the number of channels (and consequently the bandwidth) associated with an optical central office, systems have been developed which utilize wavelength division multiplexing (WDM). In conventional WDM-based optical central offices, one laser is required for each optical carrier that is transmitted on each fiber. That is, if the central office has 100 fibers and transmits 10 optical carriers per fiber, then a total of 1,000 lasers are required to generate the 1,000 optical carriers that are distributed via the 100 fibers. The large number of lasers required for the conventional configuration represents a major cost to the central office. In order to reduce the number of lasers required in an optical central office and thereby reduce the overall cost, systems have been developed which share lasers among fibers. For example, an optical central office utilizing centralized wavelength distribution is disclosed in U.S. Patent No. 5,221,983, entitled "Passive Photonic Loop Architecture Employing Wavelength Multiplexing," issued to Wagner. Wagner teaches optical sources that are split 16 times for distribution over 16 separate optical fibers. To distribute the optical carrier to 16 separate fibers, the initial optical carrier signals are passed through 1 × 16 power splitters (PS₁ through PS₁₆) that distribute the optical carriers to 16 output fibers. Each resulting optical carrier signal has 1/16th of the original optical energy after the 1 × 16 split. While the Wagner system works well for distributing an optical carrier among 16 output fibers, if the system is scaled up such that the optical carriers are split among many more output fibers, for example several hundred fibers, the diminished power in the split optical carriers will cause the signal-to-noise ratio of the split optical carriers to degrade to unacceptable levels. Increasing the intensity of the initial optical carrier signals to overcome the signal-to-noise ratio problem is prevented by the output power limitations associated with commercially available laser diodes.

Because of the large bandwidth transmission capabilities of optical fibers, the use of optical communications systems continues to grow, however the above mentioned problems may limit the potential opportunities for future growth. As a result, what is needed is a centralized wavelength distribution system and method that overcome the scaling problems of the prior art optical communications systems while providing improved channel density and bandwidth.

### SUMMARY OF THE INVENTION

A method and a system for distributing optical carrier signals involve generating multiple optical carrier signals at different carrier wavelengths, splitting the carrier signals a first time, amplifying the split carrier signals, splitting the carrier signals a second time, modulating data onto the twice-split carrier signals, and then multiplexing modulated carrier signals of different wavelengths together for transmission over common optical paths. In one embodiment, the multiple optical carrier signals are split and amplified separately by a unique carrier wavelength before being multiplexed. In other embodiments, the multiple optical carrier signals are multiplexed together for the first signal splitting operation and for the carrier signal amplification. The multiplexed signals are then demultiplexed so that the optical carrier signals can be individually modulated. The individually modulated optical carrier signals are then multiplexed with carrier signals of different carrier wavelengths for transmission throughout a subscriber area. By amplifying optical carrier signals during signal distribution, a low number of optical sources are required to generate multiple optical carrier signals that can be used to transmit unique data over a wide subscriber area.

In a preferred embodiment, the system for distributing optical carrier signals is encompassed in an optical central office that controls communications within a network of remote nodes and subscribers. The central office is the central generation and distribution point for the optical carriers, the remote nodes are localized distribution points that interface between the central office and the subscribers, and the subscribers are the end-users of data that is transmitted over the optical communications system utilizing the optical carriers. An exemplary central office is dedicated to four remote nodes, with each node being connected to the central office by 225 separate optical fibers, for a total of 900 optical fibers. Each optical fiber transmits 80 wavelength-specific optical carriers for a total of 72,000 individually controllable optical channels (80 carrier wavelengths per optical fiber × 900 optical fibers). In the preferred embodiment, each individually controllable optical channel must be isolated, so that each optical channel (carrier) can be individually modulated with unique data. Instead of providing 72,000 optical sources for generation of the 72,000 optical carriers, the preferred embodiment utilizes a master optical source arrangement that utilizes one optical source per carrier wavelength, for a total of 80 optical sources.

In accordance with the invention, each master optical source generates an initial optical carrier that is distributed into 900 separate fibers, so that each optical carrier can be individually modulated by a dedicated external modulator. In a system having optical carriers of 80 different wavelengths, 80 different master laser diodes are utilized as the optical sources, with one laser diode being specific to generating a particular wavelength-specific optical carrier. Before transmission from the central office, one optical carrier generated from each master laser diode is multiplexed into each of 900 output distribution optical fibers that are connected to the central office.

In one configuration of a central office, an initial optical carrier signal λ₁ is generated from a λ₁ master laser diode. The initial optical carrier is transmitted from the master laser diode to a level-one splitter via an optical fiber. The level-one splitter divides the initial optical carrier signal into 30 identical optical carrier signals. The 30 optical carrier signals are then transmitted over 30 separate but identical optical fibers to 30 optical amplifiers. The 30 optical carriers are amplified by respective amplifiers and then transmitted to 30 level-two splitters. The 30 level-two splitters that receive the amplified signals divide each of the 30 optical carrier signals into 30 separate optical carrier signals for a total of 900 separate optical carrier signals at wavelength λ₁. The twice split and once amplified optical carriers are transmitted to 900 separate optical fibers and 900 external modulators. The 900 optical carriers at λ₁ can then be individually modulated to carry unique information. The distribution of the other optical carrier wavelengths, λ₂ through λ₈₀, is accomplished in parallel with wavelength λ₁ using the same dual-level splitting used for wavelength λ₁. Once all of the optical carriers are divided and individually modulated, the optical carriers of the different wavelengths (λ₁-λ₈₀) are multiplexed together, using 900 output multiplexers, for transmission via common output distribution optical fibers. The multiplexers multiplex one optical carrier from each of the 80 wavelength-specific optical carriers for transmission through each output distribution optical fiber.

In another embodiment of the invention, the 80 different optical carriers are initially multiplexed together and remain multiplexed together through the first split and the amplification processes. Specifically, 80 master laser diodes are utilized to generate 80 separate optical carriers at different carrier wavelengths, λ₁ through λ₈₀. All of the initial optical carriers are transmitted from the master laser diodes into a multiplexer that multiplexes the 80 optical carriers onto a single optical fiber. The multiplexed optical carriers are transmitted over the single fiber from the initial multiplexer to a 1 × 30 splitter that divides the multiplexed optical carriers into 30 identical multiplexed signals. The 30 multiplexed signals are transmitted over dedicated fibers to respective optical amplifiers. After the multiplexed signals have been amplified, the optical carriers are transmitted to 30 level-two demultiplexers that demultiplex the signals into the 80 different optical carrier wavelengths, λ₁ through λ₈₀. Subsequent to demultiplexing, each wavelength-specific optical carrier is transmitted to a 1 × 30 level-two splitter. The level-two splitters divide each of the 80 wavelength-specific optical carriers into 30 separate wavelength-specific optical carriers that can be individually modulated by external modulators. After modulation, the wavelength-specific optical carriers are multiplexed together by output multiplexers for transmission from the central office via common output distribution fibers.

An advantage of the invention is that optical carrier signals can be widely distributed over a subscriber area without having to utilize multiple optical sources to generate optical carrier signals at the same wavelength. Another advantage of the invention is that the amplification operation allows a single optical carrier to be split on a large scale for wide distribution without significant degradation. Further, because multiple optical carriers are multiplied together for transmission from the central office, greater channel density and transmission bandwidth are achieved utilizing a given number of optical fibers.

### BRIEF DESCRIPTION OF THE DRAWINGS

Fig. 1 is an optical communications system that includes a central office, remote nodes, and subscribers.
Fig. 2 is a configuration of an optical central office that incorporates the master laser diode concept without initial multiplexing in accordance with the invention.
Fig. 3 is a configuration of an optical central office that incorporates the master laser diode concept with initial multiplexing in accordance with the invention.
Fig. 4 is a configuration of an optical central office that incorporates the master laser diode concept with initial multiplexing in accordance with the invention.
Fig. 5 is a depiction of a central office having a distributed tap system with amplification in accordance with the invention.
Fig. 6 is a process flow diagram of a preferred method for distributing optical carrier signals in accordance with the invention.

### DETAILED DESCRIPTION

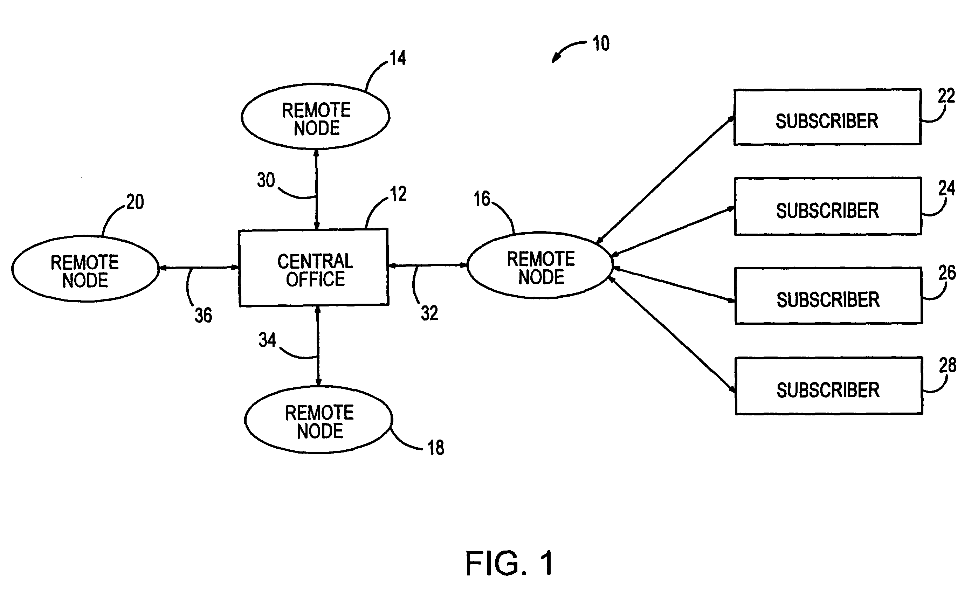

Fig. 1 is a depiction of an optical communications system 10 that includes a central office 12, remote nodes 14, 16, 18, and 20, and subscribers 22, 24, 26, and 28. The central office, described in further detail below, is the central generation and distribution point for optical carriers. The remote nodes are localized distribution points which provide the interface between the central office and the subscribers. The subscribers are the end-users of data that is transmitted over the optical communications system utilizing the optical carriers. The subscribers may include discrete locations such as residences and/or commercial locations. In an embodiment of the invention, each connection 30, 32, 34, and 36 between the central office and the four remote nodes includes 225 separate optical fibers for a total of 900 separate optical fibers. Each optical fiber transmits 80 wavelength-specific optical carriers for a total of 72,000 individually controllable optical channels (80 carrier wavelengths per optical fiber × 900 optical fibers). Although particular numbers of optical fibers and optical carriers are specified with regard to Fig. 1, the particular numbers are not critical to the invention and can be modified to fit specific implementation needs.

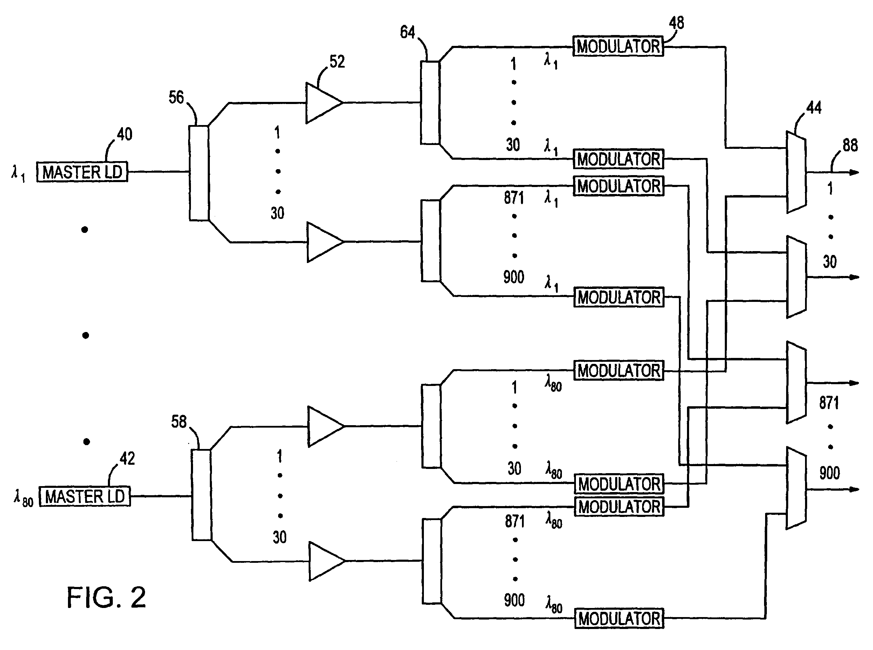

Figs. 2-4 are expanded depictions of various preferred configurations of the central office 12 that is depicted in Fig. 1. The devices incorporated into the various central office configurations include conventional optical communications devices such as wavelength-specific optical energy sources 40 and 42, power splitters 56, 58, 60, 64, 72, and 76, optical amplifiers 52, optical modulators 48, optical multiplexers 44 and 84, and/or optical demultiplexers 68 and 80. In the preferred embodiments, the optical sources include light emitting diodes, or laser diodes, that emit laser light in the 1,200 to 1,600 nm. The preferred laser diodes emit light having wavelength stability and linewidth tolerances compatible with dense wavelength division multiplexing (DWDM). The power splitters are preferably 1 x N splitters that divide incoming optical energy into N equal signals. The optical amplifiers are preferably erbium doped fiber amplifiers (EDFAs). The optical amplifiers may alternatively be low cost semiconductor amplifiers, or any other suitable amplifiers.

In the preferred embodiment each optical carrier must be divided into many separate signals, so that each optical carrier can be individually modulated with unique data. In the central office configurations shown in Figs. 2-4, there are 80 different optical carrier wavelengths and each optical carrier wavelength is distributed into 900 separate optical fibers (225 fibers per branch × 4 branches). In some prior art systems, 72,000 laser diodes (900 fibers × 80 optical carriers per fiber) are required to generate the necessary optical carriers. In other prior art systems, centralized lasers are utilized, however laser diode power limitations and signal-to-noise ratio problems prevent the large scale division described herein. In order to overcome the prior art limitations, in the preferred embodiment, a single master laser diode is used to generate one master optical carrier at each wavelength and then the optical carriers are split and amplified to accomplish the desired large scale division while overcoming signal-to-noise ratio problems.

Fig. 2 is one arrangement of a central office that incorporates the master laser diode concept for a system that utilizes 80 different wavelength-specific optical carriers that are distributed over 900 separate fibers for individual modulation. As shown in Fig. 2, each one of 80 different master laser diodes 40 and 42 generates an optical carrier at a different specific wavelength (λ₁-λ₈₀). Optical carrier distribution is initially described with reference to the optical carrier having a wavelength of λ₁ and the distribution of the other optical carriers (λ₂-λ₈₀) is similar to λ₁ as shown in Fig. 2.

An initial optical carrier signal at λ₁ is generated from the λ₁ master laser diode 40. The initial optical carrier is transmitted from the master laser diode to a level-one splitter 56 via an optical fiber. The level-one splitter divides the initial optical carrier signal into N equal optical carrier signals, where N is equal to 30. As noted above, N can be any number and 30 is used for example purposes. The 30 optical carriers are then transmitted over 30 separate optical fibers to 30 optical amplifiers 52. The 30 optical carriers are amplified by the respective amplifiers and then transmitted to 30 level-two splitters 64. Amplifying the 30 optical carriers after the level-one split allows the system to reduce signal-to-noise ratio degradation, while accomplishing the large scale division of a centralized optical source.

The 30 level-two splitters 64 that receive the amplified signals divide each of the 30 optical carrier signals into 30 separate optical carrier signals for a total of 900 separate optical carrier signals at wavelength λ₁. The twice-split and once-amplified optical carriers are then transmitted to 900 external modulators 48 via 900 separate optical fibers. The 900 optical carriers at λ₁ can then be individually modulated to carry unique information. Preferred modulation rates include 2.5 Gbps and 10 Gbps, although other rates are possible. Although two levels of splitting and one level of amplification are described, larger scale distribution of the optical carriers can be accomplished with subsequent levels of splitting and amplification. In addition, smaller scale distribution can be accomplished by reducing signal splits as needed. When multiple levels of amplification are utilized, it is preferred that the largest gain is introduced early in the distribution system to minimize signal-to-noise ratio problems.

As shown in Fig. 2, the distribution of the other optical carrier wavelengths (λ₂through λ₈₀) is accomplished using the same dual-level splitting used for wavelength λ₁. Once all of the optical carriers are divided and individually modulated, the optical carriers of the different wavelengths (λ₁-λ₈₀) are multiplexed together, utilizing 900 output multiplexers, for transmission via common output distribution optical fibers. As is well known, the multiplexers multiplex one optical carrier from each of the 80 wavelength-specific optical carriers for transmission from the central office.

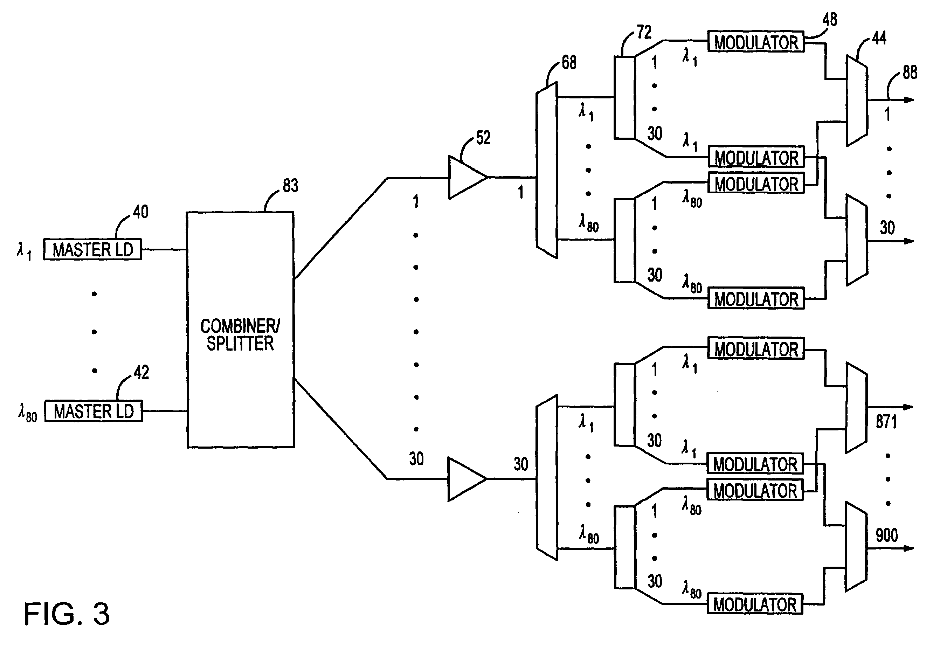

Fig. 3 is another configuration of a central office that incorporates the master laser diode concept for a system having 80 different wavelength-specific optical carriers that are to be distributed over 900 output distribution optical fibers. The fundamental difference between the configuration of Fig. 2 and the configuration of Fig. 3 is that the 80 different optical carriers in Fig. 3 are initially combined and remain combined throughout the amplification process. Specifically, referring to Fig. 3, 80 master laser diodes 40 and 42 are utilized to generate 80 separate optical carriers at different carrier wavelengths, λ₁ through λ₈₀. All of the initial optical carriers are transmitted from the master laser diodes to a combiner/splitter 83 that combines and splits the 80 optical carriers for transmission onto output fibers. The combiner/splitter divides the combined optical carriers into 30 equal multi-wavelength signals. The 30 multi-wavelength signals are transmitted through dedicated fibers to respective optical amplifiers 52. After the combined optical carriers have been amplified, the optical carriers are transmitted to 30 level-two demultiplexers 68 that demultiplex the combined signals into the 80 different optical carrier wavelengths, λ₁ through λ₈₀. Subsequent to demultiplexing, each wavelength-specific optical carrier is transmitted to a 1 × 30 level-two splitter 72. Looking specifically at the first branch of the system, the first level-two demultiplexer 68 separates the multiplexed signal into the 80 different wavelength-specific optical carriers, λ₁-λ₈₀, and each wavelength-specific optical carrier is divided into 30 separate wavelength-specific optical signals by the respective wavelength-specific level-two splitters 72. The combiner/splitter can be replaced by other optical devices that accomplish the same result. For example, an 80 × 1 multiplexer and a 1 × 30 splitter can be used to accomplish the same result.

As a result of the wavelength-specific splitting, each of the 80 wavelength-specific optical carriers is divided into 900 separate optical signals that can be separately modulated by the wavelength-specific external modulators 48. After modulation, optical carriers of different carrier wavelengths are multiplexed together by output multiplexers 44 for transmission from the central office via common output distribution optical fibers 88.

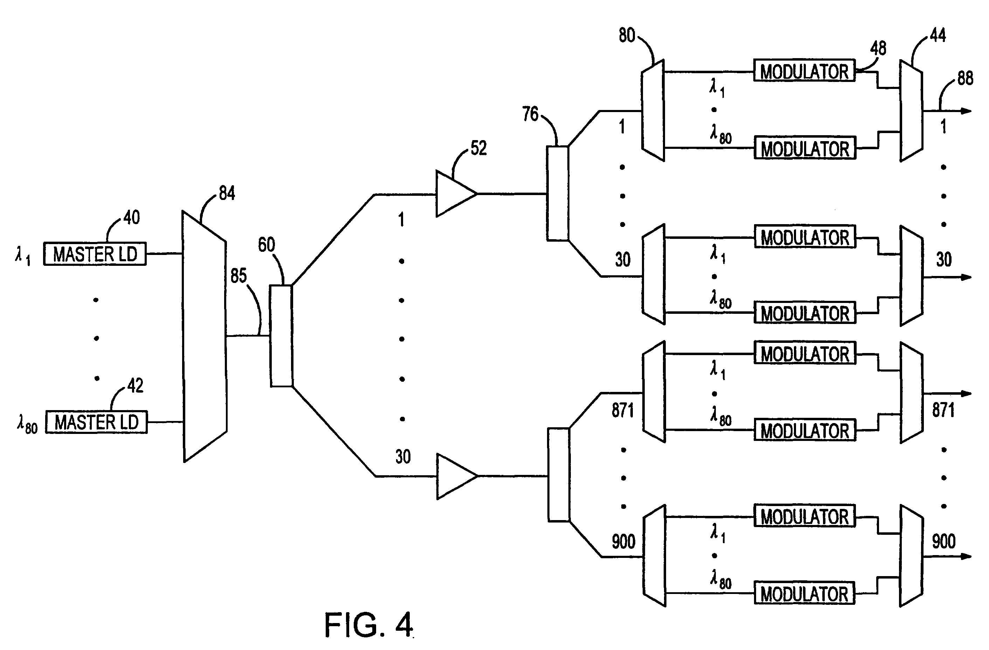

Fig. 4 is another configuration of a central office that incorporates the master laser diode concept for a system having 80 different wavelength-specific optical carriers that are to be distributed over 900 optical fibers. Similar to the configurations of Figs. 2 and 3, the central office of Fig. 4 includes 80 wavelength-specific master laser diodes 40 and 42 that output wavelength-specific optical carriers at 80 different wavelengths, λ₁ through λ₈₀. Although any device that has the net effect of combining and splitting the optical carriers can be used, the combination of an 80 × 1 multiplexer and a 1 × 30 is described for example purposes. In Fig. 4, the 80 optical carriers are transmitted to an 80 × 1 multiplexer 84 that multiplexes the optical carriers (λ₁ through λ₈₀) onto a single optical fiber 85. The multiplexed signal is transmitted from the initial multiplexer to a 1 × 30 level-one splitter 60 that divides the signal into 30 separate and equal signals. Each of the 30 multiplexed signals is transmitted from the level-one splitter to a respective optical amplifier 52, where the multiplexed signals are amplified. After amplification, each of the 30 multiplexed signals is transmitted to a dedicated 1 × 30 level-two splitter 76 which divides the multiplexed signal into 30 separate and equal multiplexed signals. Referring specifically to the first branch of the distribution system for example purposes, after the level-two splitter, the 30 multiplexed optical carriers are transmitted to 30 level-two demultiplexers 80. The 30 multiplexed optical carriers are demultiplexed into 80 wavelength-specific signals by the level-two demultiplexers.

As a result of the demultiplexing, 900 separate optical carriers are generated at each carrier wavelength. The separate optical carriers are transmitted from the demultiplexers to dedicated external modulators 48 for individual modulation. The modulated optical carriers are then transmitted to output multiplexers 44. At the output multiplexers, the 80 wavelength-specific optical carriers are multiplexed into common output distribution optical fibers 88 for transmission from the central office.

Although not shown in Figs. 2-4, an initial level of amplification can alternatively be included in the distribution systems. For example, in the configuration of Fig. 2, optical amplifiers can be located between each master laser diode 40 and 42 and the respective 1 × 30 splitters 56 and 58. In the configurations of Figs. 3 and 4, a single optical amplifier can be located between the initial 80 × 1 multiplexers 84 and the level-one splitters 60.

All three central office configurations shown in Figs. 2-4 include 80 master laser diodes, 72,000 external modulators, and 900 output multiplexers. However, the type and number of optical devices located between the master laser diodes 40 and 42 and the output multiplexers 44 vary depending on the particular configuration. The variation of optical devices is tabulated in Table 1 for each configuration.

**TABLE 1**

| Configuration | Initial Combiners | Level-One Splitters | Optical Amplifiers | Level-Two Splitters | Level-Two Demultiplexers |
|---|---|---|---|---|---|
| Fig. 2 | 0 | 30 | 2400 | 2400 | 0 |
| Fig. 3 | 1 | 1 | 30 | 2400 | 30 |
| Fig. 4 | 1 | 1 | 30 | 30 | 900 |

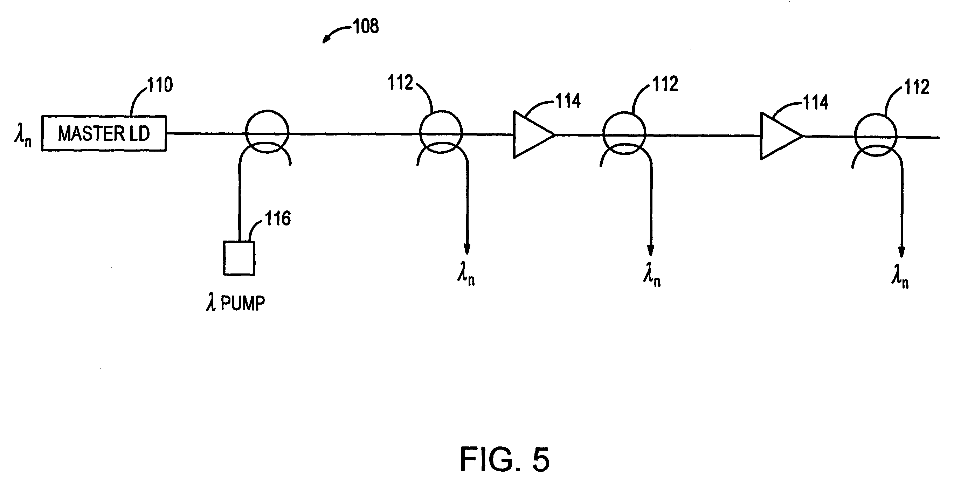

In an alternative to the configurations of Figs. 2-4, the splitters can be replaced by a distributed tap system. Fig. 5 is a depiction of a distributed tap system 108. The system includes a master laser diode 110 that generates an optical carrier λₙ. Portions of the optical carrier are tapped off of the main fiber through tapping couplers 112. Amplifiers 114 in the form of EDFAs are located between the taps in order to introduce gain to the system. The gain is introduced to compensate for losses that occur when the portions of the optical carrier are tapped off. The source of the gain is a pump 116 that can be added from either or both ends of the tap system.

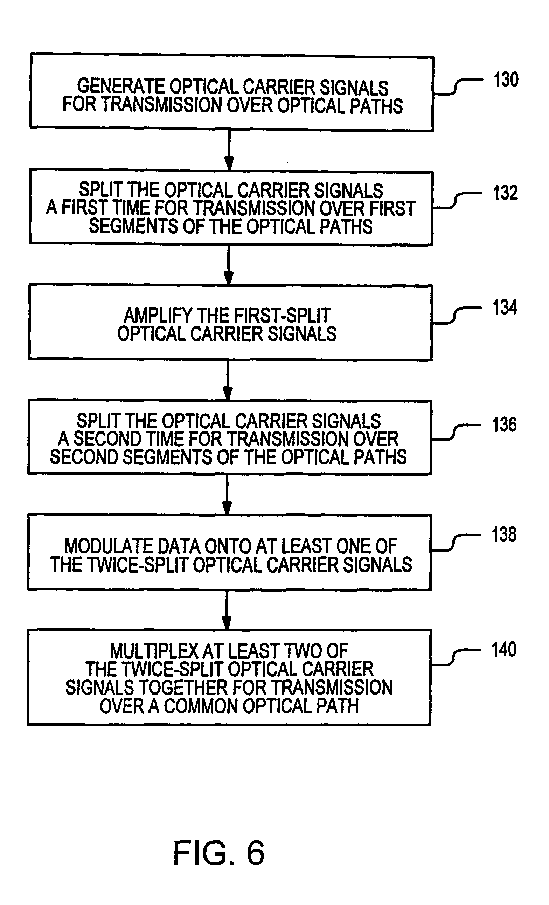

A preferred method for distributing optical carrier signals in an optical communications system is depicted in the process flow diagram of Fig. 6. In a step 130, optical carrier signals are generated from multiple optical sources for transmission over multiple optical paths, wherein each optical carrier signal has a carrier wavelength. In a step 132, the optical carrier signals are split a first time for transmission over first segments of the optical paths. In a step 134, the first-split optical carrier signals are amplified. In a step 136, the optical carrier signals are split a second time after the amplification for transmission over second segments of the optical paths. In a step 138, data is modulated onto at least one of the twice-split optical carrier signals. In a step 140, at least two of the twice-split optical carrier signals are multiplexed for transmission over a common optical path.

## Claims

1. A method for distributing optical carrier signals in an optical communications system comprising the steps of:
generating (130) optical carrier signals from a plurality of optical sources for transmission over a plurality of optical paths, each optical carrier signal having a carrier wavelength;
splitting (132) said optical carrier signals a first time for transmission over first segments of said optical paths;
amplifying (134) said first split optical carrier signals;
splitting (136) said optical carrier signals a second time after said amplification for transmission over second segments of said optical paths, thereby providing multiply split optical carrier signals;
modulating (138) data onto at least one of said multiply split optical carrier signals; and
multiplexing (140) at least two of said multiply split optical carrier signals together for transmission over a common optical path.

2. The method of claim 1 wherein each said optical source (40 and 42) generates an optical carrier signal at a unique carrier wavelength.

3. The method of claim 2 wherein said first step of splitting (132) is performed separately on each said optical carrier signal in order to divide said each optical carrier signal into multiple optical carrier signals of a single carrier wavelength.

4. The method of claim 2 or 3 further including a step of combining said optical carrier signals of unique carrier wavelengths from said optical sources (40 and 42) onto a single optical path.

5. The method of one of the preceding claims wherein said first step of splitting (132) includes a step of splitting said combined optical carrier signals and wherein said step of amplifying (134) includes a step of amplifying said combined optical carrier signals.

6. The method of claim 5 further including a step of demultiplexing said combined optical carrier signals immediately after said step of amplifying (134), and wherein said second step of splitting includes a step of splitting demultiplexed optical carrier signals.

7. An optical communications system comprising:
a plurality of optical sources (40 and 42) that generate optical carrier signals, with each optical source generating an optical carrier signal having a unique carrier wavelength;
a multiplexer (84) connected to receive said optical carrier signals from said optical sources and multiplex said optical carrier signals for transmission over a first optical path;
a level-one optical splitter (60) connected to said first optical path to receive said multiplexed optical carrier signals and to split said multiplexed optical carrier signals for transmission over N optical paths, where N is greater than one;
N optical amplifiers (52) that are associated with said N optical paths on a one-to-one basis for amplifying said multiplexed optical carrier signals; and
a demultiplexer/splitter unit (68 and 72; 76 and 80), connected to receive said optical carrier signals from said optical amplifiers, for demultiplexing said multiplexed optical carrier signals and for splitting said optical carrier signals such that each optical carrier signal of one of said unique carrier wavelengths is transmitted individually over multiple output optical paths.

8. The system of claim 7 wherein said demultiplexer/splitter unit (68 and 72) includes N demultiplexers connected one each to said N optical paths, wherein said N demultiplexers separate said optical carrier signals by carrier wavelength for transmission over wavelength-specific optical paths.

9. The system of claim 8 wherein said demultiplexer/splitter unit (68 and 72) includes a wavelength-specific level-two splitter associated with each of said wavelength-specific optical paths of said N demultiplexers, and wherein said wavelength-specific level-two splitters divide said demultiplexed optical carrier signals into multiple optical carrier signals for transmission over said multiple output optical paths.

10. The system of claim 9 further comprising:
a plurality of modulators (48) connected to said multiple output optical paths for individually modulating said optical carrier signals; and
a plurality of multiplexers (44) connected to said modulators to multiplex optical carrier signals of unique carrier wavelengths onto common output distribution optical paths.
